# EUROPÄISCHE PATENTSCHRIFT

(11) **EP 3 951 324 B1**
(45) Veröffentlichungstag und Bekanntmachung des Hinweises auf die Patenterteilung: **26.02.2025**
(21) Anmeldenummer: 21177766.9
(22) Anmeldetag: 04.06.2021
(51) Int. Cl.: G01D 4/00

(54) **GERÄT ZUM EMPFANGEN VON ZÄHLERDATEN VON ZUMINDEST EINEM DRAHTLOS KOMMUNIZIERENDEN DIGITALEN ZÄHLER**
DEVICE FOR RECEIVING COUNTER DATA FROM AT LEAST ONE WIRELESS COMMUNICATING DIGITAL METER
APPAREIL DE RÉCEPTION DES DONNÉES DE COMPTEUR D'AU MOINS UN COMPTEUR NUMÉRIQUE SANS FIL

(30) Priorität: 04.08.2020 DE 102020120572
(43) Veröffentlichungstag der Anmeldung: 09.02.2022
(73) Patentinhaber: Mitteldeutsche Netzgesellschaft Strom mbH, 06184 Kabelsketal (DE)
(72) Erfinder: Lange, Andre, 06112 Halle (DE); Reinhardt, Florian, 06231 Bad Dürrenberg (DE)
(74) Vertreter: Bals & Vogel Patentanwälte PartGmbB

(56) Entgegenhaltungen:
- EP-A1- 2 072 958
- EP-A1- 3 451 684
- EP-A2- 1 811 271
- WO-A1-00/35063
- DE-A1- 102016 014 376
- DE-A1- 102017 110 000
- US-A1- 2007 139 219
- US-A1- 2007 205 915
- US-A1- 2012 094 600
- US-B1- 6 333 975

## Beschreibung

Die Erfindung betrifft ein Gerät zum Empfangen von Zählerdaten von zumindest einem drahtlos kommunizierenden digitalen Zähler und zum Übermitteln der empfangenen Zählerdaten mittels einer Kommunikationseinheit eines intelligenten Messsystems an zumindest einen Server zumindest eines externen Marktteilnehmers.

Im Rahmen des sogenannten "Smart Meter Rollouts" werden in Privathaushalten in Deutschland die analogen Stromzähler durch elektronische Stromzähler mit digitaler Zählerstandanzeige ersetzt. Dabei werden unter anderem sog. "intelligente Messsysteme" mit einer Kommunikationseinheit bzw. einem sog. "Smart-Meter-Gateway" zur Übermittlung des Zählerstands an eine Empfangsadresse des Netzstellenbetreibers bzw. Stromanbieters des Kunden installiert.

Auch in anderen Ländern findet die Modernisierung von Stromzählern durch das Ersetzen analoger Stromzähler durch digitale Stromzähler statt. Hierneben können auch andere Zählertypen, wie Gaszähler, Wasserzähler oder Fernwärmezähler modernisiert werden und als intelligente Messsysteme ausgestaltet werden.

Während mithilfe der Kommunikationseinheit bei den intelligenten Messsystemen eine drahtlose Übertragung des Zählerstands an einen externen Marktteilnehmer, wie beispielsweise den Stromanbieter bzw. seinen Server oder mit anderen Worten sein IT-Back-End, erfolgt und damit eine einfache Berechnung der von dem Kunden zu leistenden Zahlungen für den ihm zugeordneten Stromverbrauch möglich ist, entfällt diese Möglichkeit aus kostentechnischen Erwägungen bei anderen digitalen Zählern.

Dennoch gibt es digitale Zähler, die auch zur drahtlosen Kommunikation eingerichtet sind oder einfach nachrüstbar sind. Sie können eine Kommunikationseinrichtung, etwa eine Antenne, aufweisen und mittels eines Kommunikationsprotokolls Zählerdaten übertragen.

Allerdings besteht das Problem, dass verschiedene Zähler unterschiedliche Kommunikationsprotokolle nutzen und zudem andere Kommunikationsprotokolle als die von den intelligenten Messsystemen unterstützten Kommunikationsprotokolle nutzen. Dies erschwert eine Kommunikation untereinander oder macht eine Kommunikation untereinander ohne großen technischen sowie finanziellen Aufwand gar unmöglich.

Zum Übertragen der Zählerdaten von Zählern ohne Kommunikationseinheit an den externen Marktteilnehmer bzw. seinen Server sind deshalb üblicherweise zusätzliche Kommunikationseinheiten bzw. Kommunikationsvorrichtungen für jeden dieser Zähler notwendig, die das Kommunikationsprotokoll des jeweiligen Zählers unterstützen, und dazu eingerichtet sind, die Zählerdaten an den Server des externen Marktteilnehmer zu übermitteln.

Entsprechend ist es eine Aufgabe der Erfindung, eine Lösung bereitzustellen, mittels derer verschiedene Zählerstände auf einfache und kostengünstige Art und Weise an einen oder mehrere externe Marktteilnehmer übertragen werden können.

Die voranstehende Aufgabe wird durch die Gegenstände der unabhängigen Patentansprüche 1, 10 und 12 gelöst.

Demnach löst die Erfindung die Aufgabe gemäß einem ersten Aspekt durch ein System gemäß Anspruch 1.

Die Erfinder haben herausgefunden, dass die Nutzbarmachung der Kommunikationseinheit, die auch als Smart-Meter-Gateway bezeichnet werden kann, des intelligenten Messsystems für drahtlos kommunizierende digitale Zähler eine Lösung bereitstellen würde, mit nur einer Kommunikationseinheit, nämlich der des intelligenten Messsystems, sämtliche Zählerdaten von in Reichweite befindlichen drahtlos kommunizierenden digitalen Zählern ohne Kommunikationseinheit an einen Server eines externen Marktteilnehmers oder an Server verschiedener Marktteilnehmer zu übermitteln.

Allerdings hat sich gezeigt, dass die unterschiedlichen verwendeten Kommunikationsprotokolle, einerseits nämlich der unterschiedlichen Zähler-Kommunikationsprotokolle der Zähler selbst und andererseits des davon verschiedenen Kommunikationseinheit-Kommunikationsprotokolls, keine direkte Kommunikation zwischen den Zählern und der Kommunikationseinheit erlauben.

Das Gerät des erfindungsgemäßen Systems ist einerseits zum Empfangen von Zählerdaten von zumindest einem drahtlos kommunizierenden digitalen Zähler, insbesondere von zumindest zwei oder mehr drahtlos kommunizierenden digitalen Zählern eingerichtet. Und es ist andererseits zum Übermitteln der empfangenen Zählerdaten mittels der Kommunikationseinheit des intelligenten Messsystems an einen Server eines externen Marktteilnehmers oder an Server verschiedener externer Marktteilnehmer eingerichtet.

Demgemäß schlägt das Gerät eine Kommunikationsbrücke zwischen den Zählern und der Kommunikationseinheit. Die Kommunikationseinheit des intelligenten Messsystems wird so zur Übermittlung von Zählerdaten nicht nur eines digitalen Zählers des intelligenten Messsystems, sondern auch von anderen digitalen Zählern nutzbar gemacht. Dies macht eine Ausrüstung der anderen digitalen Zähler mit Kommunikationseinheiten zur einfachen und zuverlässigen Ablesung ihrer Zählerdaten überflüssig. Dadurch werden die Kosten für die Ausstattung von Zählern in Gebäuden erheblich reduziert und die Datenqualität der Zählerdaten beim externen Marktteilnehmer wird erheblich gesteigert.

Das Gerät kann dabei beispielsweise als ein Gerät für ein Gebäude, beispielsweise ein Wohnhaus, beispielsweise mit einem oder mehreren Privathaushalten, oder als ein Gerät für einen Privathaushalt ausgestaltet sein. Entsprechend kann das intelligente Messsystem das eines Privathaushalts sein und auch die drahtlos kommunizierenden digitalen Zähler können die eines Privathaushalts sein. Der Zähler kann dabei insbesondere eine moderne Messeinrichtung mit digitalem Zähler sein. Damit dient das Gerät als eine Lösung für die Versorgung von Privathaushalten mit etwa Strom, Wasser, Fernwärme und Gas.

Der externe Marktteilnehmer ist derjenige, der passiv das intelligente Messsystem, insbesondere seine Zählerdaten, auslesen kann und aktiv Schalthandlungen über an das intelligente Messsystem angebundene Steuerboxen vornehmen darf. Es kann sich hierbei also beispielsweise um einen Betreiber des Zählers oder einen Anbieter von Strom, Wasser, Fernwärme oder Gas handeln. Beispielsweise kann es sich hierbei um Stadtwerke handeln.

Die Zählerdaten können insbesondere zumindest einen aktuellen Zählerstand enthalten. Der aktuelle Zählerstand kann der auf einer digitalen Zählerstandsanzeige des Zählers angezeigte Zählerstand sein. Ferner können die Zählerdaten weitere Informationen, beispielsweise eine Zähleridentifikationsinformation, etwa in Form einer Zähleridentifikationsnummer, oder auch Informationen über das Vorliegen eines Manipulationsversuchs enthalten.

Es kann vorgesehen sein, dass das Gerät ferner aufweist: eine Verarbeitungseinheit, insbesondere mit einem Mikroprozessor, die dazu eingerichtet ist, die von dem zumindest einem Zähler empfangenen Zählerdaten zu verarbeiten, bevor diese an die Kommunikationseinheit übertragen werden.

Demnach ist das Gerät zum Verarbeiten der von dem zumindest einem Zähler empfangenen Zählerdaten vor dem Übertragen der empfangenen Zählerdaten mittels der Kommunikationseinheit eingerichtet.

Dabei kann vorgesehen sein, dass die Verarbeitungseinheit dazu eingerichtet ist, ein Datenformat der von dem zumindest einem Zähler empfangenen Zählerdaten in ein standardisiertes Datenformat zu formatieren.

Dies ermöglicht es, dass unterschiedliche Datenformate unterschiedlicher Zähler stets in einem standardisierten Datenformat an dem zumindest einen Server des externen Marktteilnehmers eintreffen und dadurch unmittelbar verarbeitet werden können. So kann also vorgesehen sein, dass ein erster von zumindest zwei Zählern ein erstes Datenformat und ein zweiter der zumindest zwei Zähler ein zweites Datenformat nutzt, das von dem ersten Datenformat verschieden ist. Die Verarbeitungseinheit liest die Zählerdaten in dem ersten Datenformat und dem zweiten Datenformat aus und überführt bzw. formatiert diese Zählerdaten in das im Vorhinein definierte standardisierte Datenformat.

Insbesondere kann vorgesehen sein, dass das Kommunikationseinheit-Kommunikationsprotokoll ein drahtloses Protokoll ist.

So kann das Gerät praktisch frei in einem Gebäude oder Raum innerhalb einer drahtlosen Reichweite des Kommunikationseinheit-Kommunikationsprotokolls zu der Kommunikationseinheit und einer drahtlosen Reichweite zu dem zumindest einem Zähler platziert bzw. installiert werden.

Ferner kann vorgesehen sein, dass das Kommunikationseinheit-Kommunikationsprotokoll auf einem Home Area Network basiert.

Die Kommunikationseinheit kann mehrere Kommunikationsprotokolle unterstützen. Das Kommunikationseinheit-Kommunikationsprotokoll kann nur eines dieser mehreren Kommunikationsprotokolle sein. Als Home Area Network erlaubt das Kommunikationseinheit-Kommunikationsprotokoll einen lokalen Zugriff auf bzw. von der Kommunikationseinheit. Ferner können andere Kommunikationsprotokolle ein lokales metrologisches Netz für einen Zugriff auf den digitalen Zähler der intelligenten Messeinheit und ein Wide Area Network für einen Zugriff von außen sein. Dabei kann das Wide Area Network zur Verbindung der Kommunikationseinheit mit dem zumindest einen Server des zumindest einen externen Marktteilnehmers genutzt werden.

Erfindungsgemäß is vorgesehen, dass die Empfangseinheit zumindest zwei voneinander unterschiedliche drahtlose Zähler-Kommunikationsprotokolle unterstützt.

Dadurch kann das Gerät mit Zählern kommunizieren, die unterschiedliche Zähler-Kommunikationsprotokolle unterstützen. So kann das Gerät eine weite Bandbreite unterschiedlicher Zählertypen bzw. Zählerbauarten abdecken und so mit vielen oder allen verschiedenen Zählern eine Kommunikation aufbauen.

Außerdem kann vorgesehen sein, dass das zumindest eine Zähler-Kommunikationsprotokoll auf einem Wireless-M-Bus-Standard und/oder einem Long Range Wide Area Network (LoRaWAN) basiert.

So kann insbesondere eines von zumindest zwei Zähler-Kommunikationsprotokollen auf dem Wireless-M-Bus-Standard basieren und ein anderes von den zumindest zwei Zähler-Kommunikationsprotokollen auf dem Long Range Wide Area Network basieren.

Dabei kann vorgesehen sein, dass die Empfangseinheit einen Wireless-m-Bus-Empfänger sowie eine Wireless-m-Bus-Antenne und einen LoRaWAN-Empfänger sowie eine LoRaWAN-Antenne aufweist.

Die Ausbildung der Empfänger mit zwei Antennen, nämlich einer Wireless-m-Bus-Antenne und einer LoRaWAN-Antenne ermöglicht ein besonders kostengünstig herstellbares Gerät, da eine Kombinationsantenne bzw. eine Antenne, die beide Zähler-Kommunikationsprotokolle unterstützt, demgegenüber unverhältnismäßig teurer ist.

Insbesondere kann vorgesehen sein, dass das Gerät einen Stromanschluss zur Versorgung mit Strom aufweist.

Gegenüber einer Lösung mit einem Energiespeicher, etwa in Form einer Batterie, ist das Gerät dadurch praktisch wartungsfrei. Das Gerät kann einen Anschluss für ein Niederspannungsnetz aufweisen oder direkt an ein Stromverteilnetz angeschlossen werden. Das Gerät kann beispielsweise einen Netzstecker für eine Steckdose aufweisen und dazu eingerichtet sein, mit dem Netzstecker an der Steckdose befestigt und mit Strom versorgt zu werden.

Damit bringt das System gemäß der Erfindung die gleichen Vorteile mit sich, wie sie ausführlich mit Bezug auf das Gerät des Systems der Erfindung beschrieben sind. Zudem kann das System dazu geeignet sein, das später beschriebene Verfahren gemäß einem weiteren Aspekt der Erfindung auszuführen.

Es kann vorgesehen sein, dass das Gerät dazu eingerichtet ist, mittels der Kommunikationseinheit einen transparenten Datenkanal mit durchgehender IP-Verbindung zwischen dem Gerät und dem zumindest einen Server des zumindest einen externen Marktteilnehmers aufzubauen, wobei die empfangenen Zählerdaten mittels des transparenten Datenkanals übertragen werden.

Bei einem solchen transparenten Datenkanal bekommt die Kommunikationseinheit selbst nichts von der Kommunikation zwischen dem Gerät und dem zumindest einen Server mit und nimmt auch nicht an der Kommunikation teil, erhält also keine Daten oder dergleichen. Stattdessen erfolgt die Kommunikation via der Kommunikationseinheit unmittelbar zwischen dem Gerät und dem zumindest einen Server.

Ferner kann vorgesehen sein, dass der zumindest eine Zähler ein Stromzähler, Gaszähler, Wasserzähler oder Fernwärmezähler ist.

Außerdem kann vorgesehen sein, dass das System zwei drahtlos kommunizierende digitale Zähler, die insbesondere voneinander unterschiedliche drahtlose Zähler-Kommunikationsprotokolle unterstützen, aufweist.

Dabei kann vorgesehen sein, dass die zumindest zwei Zähler verschiedene von einem Stromzähler, Gaszähler, Wasserzähler oder Fernwärmezähler sind. Derartige verschiedene Zähler unterstützen oft unterschiedliche Zähler-Kommunikationsprotokolle.

Die Verarbeitungseinheit des Geräts kann unterschiedliche Datenformate der Zählerdaten von diesen Zählern in ein standardisiertes Datenformat formatieren. Alternativ kann diese Formatierung in dem Server des externen Marktteilnehmers erfolgen.

Erfindungsgemäß ist vorgesehen, dass das intelligente Messsystem einen digitalen Zähler aufweist.

Der digitale Zähler kann beispielsweise ein Stromzähler oder ein Gaszähler sein. Im Rahmen des Smart-Meter-Rollouts werden derzeit Stromzähler in Deutschland als intelligente Messsysteme installiert. Insoweit können die Kommunikationseinheiten dieser intelligenten Messsysteme, die für die Übertragung des Zählerstands des digitalen Zählers des intelligenten Messsystems eingerichtet sind und nicht mit den Zähler-Kommunikationsprotokollen anderer digitaler Zähler kompatibel sind, mittels des erfindungsgemäßen Geräts auch für diese weiteren digitalen Zähler ohne Kommunikationseinheit nutzbar gemacht werden.

Gemäß einem weiteren Aspekt der Erfindung wird die eingangs erwähnte Aufgabe gelöst durch ein Verfahren gemäß Anspruch 10.

Damit bringt das Verfahren gemäß dem weiteren Aspekt der Erfindung die gleichen Vorteile mit sich, wie sie ausführlich mit Bezug auf das Gerät des Systems der Erfindung beschrieben sind.

Das Verfahren kann ferner den Schritt aufweisen: Senden von Zählerdaten von dem zumindest einem drahtlos kommunizierenden digitalen Zähler an das Gerät bzw. die Empfangseinheit des Geräts. Dies kann entsprechend vor dem Empfangen der Zählerdaten mittels der Empfangseinheit erfolgen.

Das Übertragen der von dem zumindest einem Zähler empfangenen Zählerdaten kann dabei mittels der Kommunikationseinheit über einen transparenten Datenkanal mit durchgehender IP-Verbindung zwischen dem Gerät und dem zumindest einen Server des zumindest einen externen Marktteilnehmers erfolgen.

Ferner kann vorgesehen sein, dass das Verfahren den Schritt aufweist: Verarbeiten der von dem zumindest einem Zähler empfangenen Zählerdaten, bevor diese an die Kommunikationseinheit übertragen werden.

Bei der Verarbeitung kann es sich um die Formatierung des Datenformats der von dem zumindest einem Zähler empfangenen Zählerdaten in ein standardisiertes Datenformat handeln.

Außerdem kann vorgesehen sein, dass Zählerdaten von zumindest zwei drahtlos kommunizierenden digitalen Zählern mittels der Empfangseinheit empfangen werden und an zumindest zwei unterschiedliche Server verschiedener externer Marktteilnehmer übertragen werden. So können die Zählerstände an unterschiedliche externe Marktteilnehmer übertragen werden. Dazu können jeweils separate transparente Datenkanäle zwischen den unterschiedlichen Servern aufgebaut werden.

Gemäß einem weiteren Aspekt der Erfindung wird die Aufgabe gelöst durch ein Computerprogrammprodukt gemäß Anspruch 12.

Damit bringt das Computerprogrammprodukt die gleichen Vorteile mit sich, wie sie ausführlich mit Bezug auf das Gerät des Systems der Erfindung beschrieben sind.

Das Computerprogrammprodukt kann dabei insbesondere von einem Mikroprozessor des Geräts ausführbar sein. Das Computerprogrammprodukt kann dazu auf einem Speicher des Geräts gespeichert sein.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen jeweils schematisch:
- Fig. 1: eine Ansicht auf ein System gemäß einem Ausführungsbeispiel der Erfindung, und
- Fig. 2: eine schematische Ansicht des Systems aus Figur 1.

In den nachfolgenden Figuren werden für die gleichen technischen Merkmale auch von unterschiedlichen Ausführungsbeispielen die identischen Bezugszeichen verwendet.

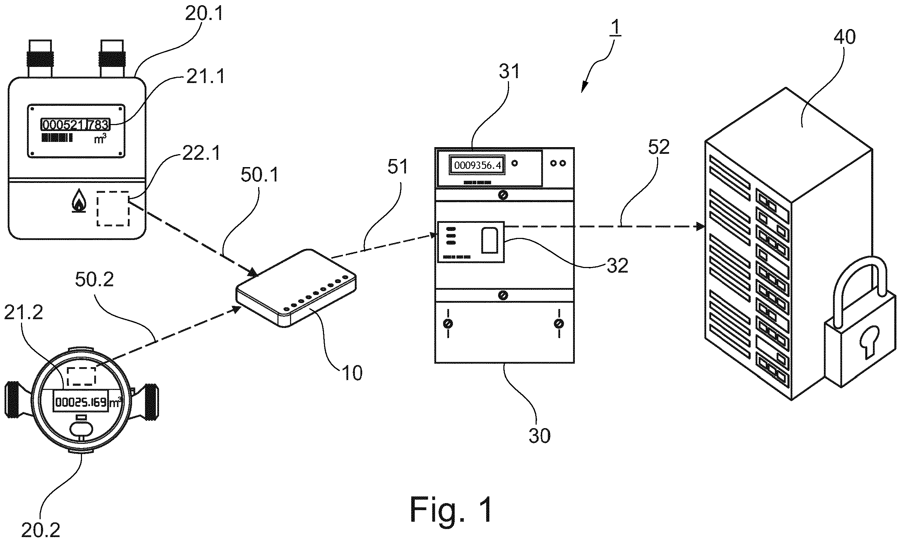

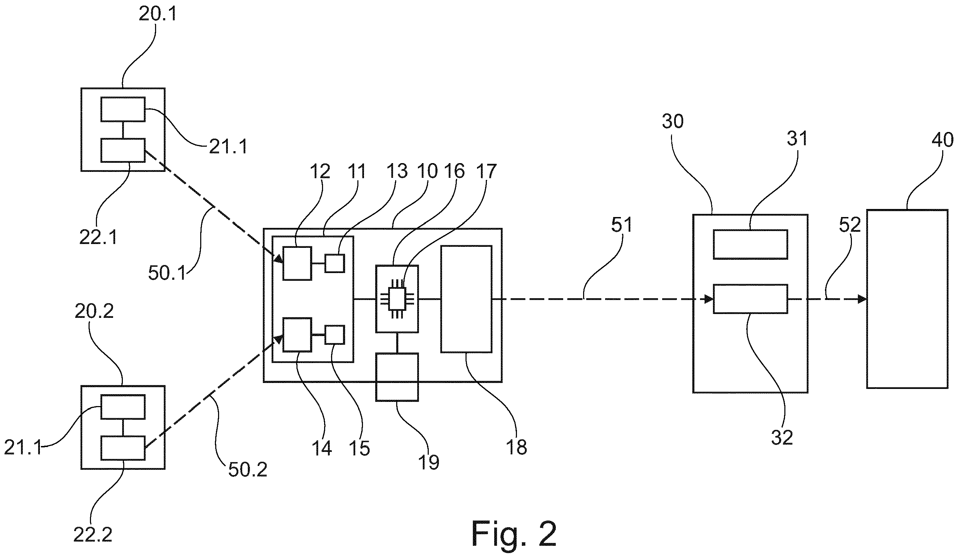

Figur 1 zeigt eine Ansicht auf ein System 1 gemäß einem Ausführungsbeispiel der Erfindung. Figur 2 zeigt eine schematische Ansicht des Systems aus Figur 1 und zeigt gegenüber der Figur 1 mehr Details, insbesondere bezüglich der Komponenten der jeweils gezeigten Vorrichtungen oder Geräte des Systems 1. Im Folgenden werden das System 1 sowie ein Ausführungsbeispiel eines erfindungsgemäßen Verfahrens anhand der Figuren 1 und 2 beispielhaft erläutert.

Das System 1 umfasst vorliegend zwei Zähler 20.1, 20.2, ein Gerät 10 und ein intelligentes Messsystem 30. Das System 1 steht über das intelligente Messsystem 30, um genau zu sein seine Kommunikationseinheit 32, mit einem Server 40 eines externen Marktteilnehmers in Kommunikation.

Alternativ zu dem gezeigten System 1 kann das System 1 auch nur einen Zähler 20 oder mehr als die zwei Zähler 20.1, 20.2 umfassen. Ferner kann das System 1 mit mehr als nur einem Server 40 eines externen Marktteilnehmers, beispielsweise zwei oder mehr Servern 40 verschiedener externer Marktteilnehmer in Kommunikation gebracht werden. Dadurch können Zählerdaten unterschiedlicher Zähler 20.1, 20.2 an unterschiedliche externe Marktteilnehmer übermittelt werden.

Vorliegend ist der erste Zähler 20.1 als ein Gaszähler 20.1 ausgebildet. Er kann jedoch alternativ als jeder andere beliebige Zähler 20, der insbesondere in einem Privathaushalt verwendet werden kann, ausgestaltet sein. So kann der erste Zähler 20.1 auch als ein Wasserzähler, Stromzähler oder Fernwärmezähler ausgebildet sein.

Der Gaszähler 20.1 ist digital und verfügt über eine erste Zählerstandsanzeige 21.1. Ferner weist der Gaszähler 20.1 eine erste Zählerkommunikationseinrichtung 22.1 auf. Die erste Zählerkommunikationseinrichtung 22.1 unterstützt ein erstes Zähler-Kommunikationsprotokoll 50.1. Das erste Zähler-Kommunikationsprotokoll 50.1 funktioniert drahtlos.

Vorliegend ist der zweite Zähler 20.2 als ein Wasserzähler 20.2 ausgebildet. Er kann jedoch alternativ als jeder andere beliebige Zähler 20, der insbesondere in einem Privathaushalt verwendet werden kann, ausgestaltet sein. So kann der erste Zähler 20.1 auch als ein Gaszähler, Stromzähler oder Fernwärmezähler ausgebildet sein.

Der Wasserzähler 20.2 ist digital und verfügt über eine zweite Zählerstandsanzeige 21.2. Ferner weist der Wasserzähler 20.2 eine zweite Zählerkommunikationseinrichtung 22.2 auf. Die zweite Zählerkommunikationseinrichtung 22.2 unterstützt ein zweites Zähler-Kommunikationsprotokoll 50.2. Das zweite Zähler-Kommunikationsprotokoll 50.2 funktioniert drahtlos.

Ferner ist das zweite Zähler-Kommunikationsprotokoll 50.2 verschieden von dem ersten Zähler-Kommunikationsprotokoll 50.1. Vorliegend basiert das erste Zähler-Kommunikationsprotokoll 50.1 auf einem Wireless-m-Bus-Standard. Das zweite Zähler-Kommunikationsprotokoll 50.2 basiert hingegen auf einem Long Range Wide Area Network (LoRaWAN).

Beide Zähler 20.1, 20.2 übertragen ihre Zählerdaten jeweils mittels der Zähler-Kommunikationsprotokolle 50.1, 50.2 bzw. auf ihrer Basis aufgebauten Verbindungen drahtlos an das Gerät 10. Das Gerät 10 weist eine Empfangseinheit 11 zum Empfangen dieser Zählerdaten auf. Die Empfangseinheit 11 ist mit einer ersten Antenne 12 und einem ersten Empfänger 13 sowie einer zweiten Antenne 14 und einem zweiten Empfänger 15 ausgestattet.

Vorliegend sind die erste Antenne 12 als eine wireless-m-Bus-Antenne 12 und der erste Empfänger 13 als ein wireless-m-Bus-Empfänger 13 ausgebildet. Dadurch kann die Empfangseinheit 11 mit dem ersten Zähler 20.1 via dem ersten Zähler-Kommunikationsprotokoll 50.1, vorliegend auf einem wireless-m-Bus-Standard basierend, kommunizieren.

Ferner sind vorliegend die zweite Antenne 14 als eine LoRaWAN-Antenne 14 und der zweite Empfänger 15 als ein LoRaWAN-Empfänger 15 ausgebildet. Dadurch kann die Empfangseinheit 11 mit dem zweiten Zähler 20.2 via dem zweiten Zähler-Kommunikationsprotokoll 50.2, vorliegend auf LoRaWAN basierend, kommunizieren.

Das Gerät 10 weist einen Stromanschluss 19 auf, mittels dem seine Stromversorgung sichergestellt wird. Die empfangenen Zählerdaten der beiden Zähler 20.1, 20.2 werden von einer Verarbeitungseinheit 16 mit einem Mikroprozessor 17 verarbeitet. Dabei werden die Zählerdaten der Zähler 20.1, 20.2 in ein standardisiertes Datenformat überführt.

Anschließend werden die Zählerdaten in dem standardisierten Datenformat mittels einer Übertragungseinheit 18 des Geräts 10 an den Server 40 des externen Marktteilnehmers übertragen. Dazu wird eine drahtlose Verbindung auf Basis eines Kommunikationseinheit-Kommunikationsprotokolls 51 zwischen der Übertragungseinheit 18 und der Kommunikationseinheit 32 des intelligenten Messsystems 32 aufgebaut.

Das intelligente Messsystem 30 weist seinerseits einen digitalen Zähler 31 auf. Der Zähler 31 ist vorliegend ein Stromzähler, kann aber auch ein anderer Zählertyp sein. Mittels der Kommunikationseinheit 32 kann normalerweise nur eine Serverkommunikationsverbindung 52 zwischen der Kommunikationseinheit 32 und dem Server 40 zur Übertragung von Daten des intelligenten Messsystems 30, insbesondere von Zählerdaten seines Zählers 31, aufgebaut werden.

Mittels des Geräts 10 und einem drahtlosen Kommunikationseinheit-Kommunikationsprotokolls 51, vorliegend auf Basis eines Home Area Networks, wird zwischen der Übertragungseinheit 18 und der Kommunikationseinheit 32 eine drahtlose Verbindung aufgebaut. Dadurch schafft das Gerät 10 einen transparenten Datenkanal mit durchgehender IP-Verbindung zwischen dem Gerät 10 und dem Server 40 des externen Marktteilnehmers. Das Gerät 10 kann nun mittels des transparenten Datenkanals die Serverkommunikationsverbindung 52 nutzen, die beispielsweise auf Basis eines Wide Area Networks ausgeführt sein kann, um die Zählerdaten in dem standardisierten Datenformat der Zähler 20.1, 20.2 an den externen Marktteilnehmer mit dem Server 40 zu übertragen.

Insbesondere kann das Gerät 10 ferner dazu eingerichtet sein, den transparenten Datenkanal mit der Serverkommunikationsverbindung 52 auch mit anderen Servern 40 anderer externer Marktteilnehmer aufzubauen (nicht gezeigt). Dadurch können die Zählerdaten der jeweiligen Zähler 20.1, 20.2 an den jeweils relevanten externen Marktteilnehmer übertragen werden. Dazu kann das Gerät 10 jeweils unterschiedliche transparente Datenkanäle für jeden Server 40 des jeweiligen externen Marktteilnehmers aufbauen.

So kann beispielsweise der Gaszählerstand des Gaszählers 20.1 an einen Server 40 eines externen Marktteilnehmers in Form des Gaslieferanten des Privathaushalts bzw. Kunden des Gaszählers 20.1 gesendet werden. Der Wasserzählerstand des Wasserzählers 20.2 kann wiederum an einen anderen Server 40 eines externen Marktteilnehmers in Form des Wasserlieferanten des Privathaushalts bzw. Kunden des Wasserzählers 20.2 gesendet werden. Und der Stromzählerstand des intelligenten Messsystems 30 kann wiederum an einen weiteren anderen Server eines externen Marktteilnehmers in Form des Stromlieferanten des Privathaushalts bzw. Kunden des intelligenten Messsystems 30 gesendet werden.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen, der durch die Ansprüche definiert ist.

### Bezugszeichenliste

- 10: Gerät
- 11: Empfangseinheit
- 12: erste Antenne, Wireless-m-Bus-Antenne
- 13: erster Empfänger, Wireless-m-Bus-Empfänger
- 14: zweite Antenne, LoRaWAN-Antenne
- 15: zweiter Empfänger, LoRaWAN-Empfänger
- 16: Verarbeitungseinheit
- 17: Mikroprozessor
- 18: Übertragungseinheit
- 19: Stromanschluss
- 20: Zähler, Gaszähler, Wasserzähler
- 21: Zählerstandsanzeige
- 22: Zählerkommunikationseinrichtung
- 30: intelligente Messeinheit
- 31: Zähler
- 32: Kommunikationseinheit
- 40: Server
- 50: Zähler-Kommunikationsprotokoll
- 51: Kommunikationseinheit-Kommunikationsprotokoll
- 52: Serverkommunikationsverbindung

## Patentansprüche

1. System (1) mit einem Gerät (10) zum Empfangen von Zählerdaten von zumindest einem drahtlos kommunizierenden digitalen Zähler (20.1, 20.2) und zum Übermitteln der empfangenen Zählerdaten mittels eines Smart-Meter-Gateways (32) eines intelligenten Messsystems (30) an zumindest einen Server (40) zumindest eines externen Marktteilnehmers, wobei das Gerät (10) aufweist:
(a) eine Empfangseinheit (11), die dazu eingerichtet ist, mittels zumindest eines drahtlosen Zähler-Kommunikationsprotokolls (50.1, 50.2) Zählerdaten von dem zumindest einem Zähler (20.1, 20.2) zu empfangen, wobei das zumindest eine Zähler-Kommunikationsprotokoll (50.1, 50.2) von dem zumindest einem Zähler (20.1, 20.2) unterstützt wird, und
(b) eine Übertragungseinheit (18), die dazu eingerichtet ist, mittels eines von dem zumindest einem Zähler-Kommunikationsprotokoll (50.1, 50.2) verschiedenen Smart-Meter-Gateway-Kommunikationsprotokolls (51) Zählerdaten an das Smart-Meter-Gateway (32) zu übertragen und mittels des Smart-Meter-Gateways (32) an den zumindest einen Server (40) des zumindest einen externen Marktteilnehmers zu übermitteln, wobei das Smart-Meter-Gateway-Kommunikationsprotokoll (51) von dem Smart-Meter-Gateway (32) unterstützt wird,
wobei die Empfangseinheit (11) zumindest zwei voneinander unterschiedliche drahtlose Zähler-Kommunikationsprotokolle (50.1, 50.2) unterstützt,
sowie mit dem zumindest einen drahtlos kommunizierenden digitalen Zähler (20.1, 20.2) und dem intelligenten Messsystem (30), wobei das intelligente Messsystem (30) einen digitalen Zähler (31) aufweist, wobei das Gerät (10) dazu eingerichtet ist, die von dem zumindest einem Zähler (20.1, 20.2) empfangenen Zählerdaten mittels des Smart-Meter-Gateways (32) des intelligenten Messsystems (30) an den zumindest einen Server (40) des zumindest einen externen Marktteilnehmers zu übertragen.

2. System (1) nach Anspruch 1, wobei das Gerät (10) dazu eingerichtet ist, mittels des Smart-Meter-Gateways (30) einen transparenten Datenkanal mit durchgehender IP-Verbindung zwischen dem Gerät (10) und dem zumindest einen Server (40) des zumindest einen externen Marktteilnehmers aufzubauen, wobei die empfangenen Zählerdaten mittels des transparenten Datenkanals übertragen werden.

3. System (1) nach einem der Ansprüche 1 oder 2, wobei der zumindest eine Zähler (20.1, 20.2) ein Stromzähler, Gaszähler, Wasserzähler oder Fernwärmezähler ist.

4. System (1) nach einem der Ansprüche 1 bis 3, wobei das System (1) zwei drahtlos kommunizierende digitale Zähler (20.1, 20.2), die insbesondere voneinander unterschiedliche drahtlose Zähler-Kommunikationsprotokolle (50.1, 50.2) unterstützen, aufweist.

5. System (1) nach einem der Ansprüche 1 bis 4, wobei das Gerät (10) ferner aufweist: eine Verarbeitungseinheit (16), insbesondere mit einem Mikroprozessor (17), die dazu eingerichtet ist, die von dem zumindest einem Zähler (20.1, 20.2) empfangenen Zählerdaten zu verarbeiten, bevor diese an das Smart-Meter-Gateway (32) übertragen werden, insbesondere wobei die Verarbeitungseinheit (16) dazu eingerichtet ist, ein Datenformat der von dem zumindest einem Zähler (20.1, 20.2) empfangenen Zählerdaten in ein standardisiertes Datenformat zu formatieren.

6. System (1) nach einem der voranstehenden Ansprüche, wobei das Smart-Meter-Gateway-Kommunikationsprotokoll (51) ein drahtloses Protokoll ist.

7. System (1) nach einem der voranstehenden Ansprüche, wobei das Smart-Meter-Gateway-Kommunikationsprotokoll (51) auf einem Home Area Network basiert.

8. System (1) nach einem der voranstehenden Ansprüche, wobei das zumindest eine Zähler-Kommunikationsprotokoll (50.1, 50.2) auf einem Wireless-M-Bus-Standard und/oder einem Long Range Wide Area Network (LoRaWAN) basiert, insbesondere wobei die Empfangseinheit (11) einen Wireless-m-Bus-Empfänger (13) sowie eine Wireless-m-Bus-Antenne (12) und einen LoRaWAN-Empfänger (15) sowie eine LoRaWAN-Antenne (14) aufweist.

9. System (1) nach einem der voranstehenden Ansprüche, wobei das Gerät (10) einen Stromanschluss (19) zur Versorgung mit Strom aufweist.

10. Verfahren, ausgeführt in einem System (1) nach einem der voranstehenden Ansprüche, wobei das Verfahren die Schritte aufweist:
(a) Empfangen von Zählerdaten von dem zumindest einen drahtlos kommunizierenden digitalen Zähler (20.1, 20.2) mittels der Empfangseinheit (11) des Geräts (10), und
(b) Übertragen der von dem zumindest einem Zähler (20.1, 20.2) empfangenen Zählerdaten mittels des Smart-Meter-Gateways (32) des intelligenten Messsystems (30), wobei das intelligente Messsystem (30) einen digitalen Zähler (31) aufweist, an den zumindest einen Server (40) des zumindest einen externen Marktteilnehmers.

11. Verfahren nach Anspruch 10, wobei das Verfahren ferner den Schritt aufweist: Verarbeiten der von dem zumindest einem Zähler (20.1, 20.2) empfangenen Zählerdaten, bevor diese an das Smart-Meter-Gateway (32) übertragen werden.

12. Computerprogrammprodukt, umfassend Befehle, die bei der Ausführung des Programms durch ein Gerät (10) des Systems (1) nach einem der Ansprüche 1 bis 9 dieses veranlassen, das Verfahren nach einem der Ansprüche 10 oder 11 auszuführen.

## Claims

1. System (1) having a device (10) for receiving meter data from at least one wirelessly communicating digital meter (20.1, 20.2) and for transmitting the received meter data by means of a smart meter gateway (32) of an intelligent metering system (30) to at least one server (40) of at least one external market participant, the device (10) having:
(a) a receiving unit (11) adapted to receive meter data from the at least one meter (20.1, 20.2) by means of at least one wireless meter communication protocol (50.1, 50.2), wherein the at least one meter communication protocol (50.1, 50.2) is supported by the at least one meter (20.1, 20.2), and
(b) a transmission unit (18) which is set up to transmit meter data to the smart meter gateway (32) by means of a smart meter gateway communication protocol (51) different from the at least one meter communication protocol (50.1, 50.2) and to transmit it to the at least one server (40) of the at least one external market participant by means of the smart meter gateway (32), the smart meter gateway communication protocol (51) being supported by the smart meter gateway (32),
wherein the receiver unit (11) supports at least two different wireless meter communication protocols (50.1, 50.2),
and with the at least one wirelessly communicating digital meter (20.1, 20.2) and the intelligent metering system (30), wherein the intelligent metering system (30) has a digital meter (31), wherein the device (10) is set up to transmit the meter data received from the at least one meter (20.1, 20.2) to the at least one server (40) of the at least one external market participant by means of the smart meter gateway (32) of the intelligent metering system (30).

2. System (1) according to claim 1, wherein the device (10) is set up to establish a transparent data channel with a continuous IP connection between the device (10) and the at least one server (40) of the at least one external market participant by means of the smart meter gateway (30), wherein the received meter data is transmitted by means of the transparent data channel.

3. System (1) according to one of claims 1 or 2, wherein the at least one meter (20.1, 20.2) is an electricity meter, gas meter, water meter or district heating meter.

4. System (1) according to any one of claims 1 to 3, wherein the system (1) comprises two wirelessly communicating digital meters (20.1, 20.2), which in particular support wireless meter communication protocols (50.1, 50.2) which are different from each other.

5. System (1) according to any one of claims 1 to 4, wherein the device (10) further comprises:
a processing unit (16), in particular comprising a microprocessor (17), adapted to process the meter data received from the at least one meter (20.1, 20.2) before transmitting it to the smart meter gateway (32), in particular wherein the processing unit (16) is adapted to format a data format of the meter data received from the at least one meter (20.1, 20.2) into a standardized data format.

6. System (1) according to any one of the preceding claims, wherein the smart meter gateway communication protocol (51) is a wireless protocol.

7. System (1) according to any one of the preceding claims, wherein the smart meter gateway communication protocol (51) is based on a home area network.

8. System (1) according to one of the preceding claims, wherein the at least one meter communication protocol (50.1, 50.2) is based on a wireless m-bus standard and/or a Long Range Wide Area Network (LoRaWAN), in particular wherein the receiving unit (11) comprises a wireless m-bus receiver (13) and a wireless m-bus antenna (12) and a LoRaWAN receiver (15) and a LoRaWAN antenna (14).

9. System (1) according to one of the preceding claims, wherein the device (10) comprises a power connection (19) for supplying power.

10. A method carried out in a system (1) according to any one of the preceding claims, the method comprising the steps of:
(a) receiving meter data from the at least one wirelessly communicating digital meter (20.1, 20.2) by means of the receiving unit (11) of the device (10), and
(b) transmitting the meter data received from the at least one meter (20.1, 20.2) to the at least one server (40) of the at least one external market participant by means of the smart meter gateway (32) of the intelligent metering system (30), wherein the intelligent metering system (30) has a digital meter (31).

11. The method of claim 10, wherein the method further comprises the step of: Processing the meter data received from the at least one meter (20.1, 20.2) before it is transmitted to the smart meter gateway (32).

12. A computer program product comprising instructions which, when the program is executed by a device (10) of the system (1) according to any one of claims 1 to 9, cause it to execute the method according to any one of claims 10 or 11.

## Revendications

1. Système (1) comprenant un appareil (10) pour recevoir des données de compteur d'au moins un compteur numérique (20.1, 20.2) communiquant sans fil et pour transmettre les données de compteur reçues au moyen d'une passerelle de compteur intelligent (32) d'un système de mesure intelligent (30) à au moins un serveur (40) d'au moins un participant externe au marché, l'appareil (10) comprenant
(a) une unité de réception (11) adaptée pour recevoir, au moyen d'au moins un protocole de communication de compteur sans fil (50.1, 50.2), des données de compteur provenant dudit au moins un compteur (20.1, 20.2), ledit au moins un protocole de communication de compteur (50.1, 50.2) étant supporté par ledit au moins un compteur (20.1, 20.2), et
(b) une unité de transmission (18) qui est conçue pour transmettre, au moyen d'un protocole de communication de passerelle de compteur intelligent (51) différent de l'au moins un protocole de communication de compteur (50.1, 50.2), des données de compteur à la passerelle de compteur intelligent (32) et pour les transmettre au moyen de la passerelle de compteur intelligent (32) à l'au moins un serveur (40) de l'au moins un participant externe au marché, le protocole de communication de passerelle de compteur intelligent (51) étant supporté par la passerelle de compteur intelligent (32),
dans lequel l'unité de réception (11) supporte au moins deux protocoles de communication de compteur sans fil (50.1, 50.2) différents l'un de l'autre,
ainsi qu'avec l'au moins un compteur numérique (20.1, 20.2) communiquant sans fil et le système de mesure intelligent (30), le système de mesure intelligent (30) présentant un compteur numérique (31), l'appareil (10) étant conçu pour transmettre les données de compteur reçues de l'au moins un compteur (20.1, 20.2) au moyen de la passerelle de compteur intelligente (32) du système de mesure intelligent (30) à l'au moins un serveur (40) de l'au moins un participant externe au marché.

2. Système (1) selon la revendication 1, dans lequel le dispositif (10) est adapté pour établir, au moyen de la passerelle de compteur intelligent (30), un canal de données transparent avec une connexion IP de bout en bout entre le dispositif (10) et l'au moins un serveur (40) de l'au moins un participant externe au marché, les données de compteur reçues étant transmises au moyen du canal de données transparent.

3. Système (1) selon l'une des revendications 1 ou 2, dans lequel ledit au moins un compteur (20.1, 20.2) est un compteur d'électricité, un compteur de gaz, un compteur d'eau ou un compteur de chauffage urbain.

4. Système (1) selon l'une quelconque des revendications 1 à 3, dans lequel le système (1) comprend deux compteurs numériques (20.1, 20.2) communiquant sans fil, qui supportent notamment des protocoles de communication sans fil de compteur (50.1, 50.2) différents les uns des autres.

5. Système (1) selon l'une quelconque des revendications 1 à 4, dans lequel le appareil (10) comprend en outre : une unité de traitement (16), comprenant notamment un microprocesseur (17), agencée pour traiter les données transmises par ledit au moins un compteur (20.1, 20.2) avant de les transmettre à la passerelle de compteur intelligent (32), en particulier dans lequel l'unité de traitement (16) est adaptée pour formater un format de données des données de compteur reçues de l'au moins un compteur (20.1, 20.2) dans un format de données standardisé.

6. Système (1) selon l'une quelconque des revendications précédentes, dans lequel le protocole de communication de la passerelle de compteur intelligent (51) est un protocole sans fil.

7. Système (1) selon l'une des revendications précédentes, dans lequel le protocole de communication de la passerelle de compteur intelligent (51) est basé sur un réseau domestique.

8. Système (1) selon l'une des revendications précédentes, dans lequel l'au moins un protocole de communication de compteur (50.1, 50.2) est basé sur un standard Wireless-M-Bus et/ou un Long Range Wide Area Network (LoRaWAN), en particulier dans lequel l'unité de réception (11) comprend un récepteur Wireless-M-Bus (13) ainsi qu'une antenne Wireless-M-Bus (12) et un récepteur LoRaWAN (15) ainsi qu'une antenne LoRaWAN (14).

9. Système (1) selon l'une des revendications précédentes, dans lequel l'appareil (10) comporte une prise de courant (19) pour l'alimentation en courant.

10. Procédé mis en oeuvre dans un système (1) selon l'une quelconque des revendications précédentes, ledit procédé comprenant les étapes comprenant:
(a) recevoir des données de compteur dudit au moins un compteur numérique communiquant sans fil (20.1, 20.2) au moyen de ladite unité de réception (11) dudit appareil (10), et
(b) transmettre les données de compteur reçues de l'au moins un compteur (20.1, 20.2) au moyen de la passerelle de compteur intelligent (32) du système de mesure intelligent (30), le système de mesure intelligent (30) comprenant un compteur numérique (31), à l'au moins un serveur (40) de l'au moins un participant externe au marché.

11. Procédé selon la revendication 10, ledit procédé comprenant en outre l'étape comprenant:
Traiter les données de compteur reçues de l'au moins un compteur (20.1, 20.2) avant de les transmettre à la passerelle de compteur intelligent (32).

12. Produit programme d'ordinateur comprenant des instructions qui, lorsque le programme est exécuté par un appareil (10) du système (1) selon l'une quelconque des revendications 1 à 9, amènent ce dispositif à exécuter le procédé selon l'une quelconque des revendications 10 ou 11.
